# EUROPEAN PATENT APPLICATION

(11) **EP 1 655 514 A1**
(43) Date of publication of application: **10.05.2006**
(21) Application number: 03786464.2
(22) Date of filing: 08.07.2003
(51) Int. Cl.: F16H 37/02

(54) **WIDE-RANGE CONTINUOUSLY VARIABLE-RATIO DRIVE**

(71) Applicant: PlanBau Energiesysteme GmbH & Co. KG, 39261 Zerbst (DE)
(72) Inventor: GULIA, Nurbey Vladimirovich, Moscow, 115280 (RU)
(74) Representative: Gritschneder, Martin
(86) International application number: PCT/RU2003/000298
(87) International publication number: WO 2005/003596

(57) **Abstract**

The invention relates to mechanical engineering and can be used for transport mechanical engineering, in particular in the form of a continuously variable gearbox for motor vehicles and other transport means. The inventive continuously variable-ratio drive consists of a planetary variable-ratio transformer provided with input and output links which are cinematically connected to each other by means of a control mechanism provided with a differential transmission unit. A matching transmission unit which connects the output link of the variable ratio transformer to one of the central gears of the differential transmission unit and increases a rotational velocity in this direction is arranged in the cinematic loop of the mechanism between the input and output links of the variable ratio transformer. The gear ratio value of the matching transmission unit is equal to or higher than the minimum gear ratio value of the variable ratio transformer. The output link of the entire drive is embodied in such a way that it is alternately connectable to the links of the control mechanism which comprises the differential and matching transmission units when the rotational velocities of said links are equal.

## Description

### Field of the Invention

The invention relates to mechanical engineering and may be used in transport mechanical engineering, in particular as an infinitely variable transmission for motor vehicles and other means of transportation.

### Prior Art

Wide-range continuously variable-ratio drives are known from the art, which have variators, primarily symmetrical as to their gear ratios, both V-belt and tore, and allow to use the both phases of gear ratio adjusting. One phase, e.g., decreasing the variator gear ratio, is used directly, and the second one - increasing the variator gear ratio - is used with power circulation in the closed loop mode with a differential train transforming an increase in the variator gear ratio into a further decrease of the whole drive gear ratio. Thus, the range of the drive variation is significantly expanded in comparison with the used basic variator (see: Pronin B.A., Revkov G.A. "Variators", M., Mashinostroenie Publishers, 1980, p. 298, Fig. 184, 185). However, due to the fact that the basic variator is made not under a planetary design, is symmetrical as to the gear ratio, the drive comprises a big number of auxiliary gear groups, including bevel gear differentials, this does not allow to use high speeds due to gyroscopic effects, complicates the drive and reduces its efficiency greatly.

A continuously variable-ratio drive is known from the art, which comprises a disc variator made under a planetary design with a driven carrier, wherein the input shaft and the carrier are closed by a differential, in the result both the efficiency and the range of the drive gear ratios have been changed (GB, Patent No. 1384679, Priority Date 02/19/1975, IPC F 16 H 15/50). An analogous, but closer as to the technical effect and the task solved, technical solution is described in EP Patent No. 0459234, IPC F 16 H 15/52, Priority Date 12/04/1991 - the prototype. The known solution, however, does not allow to use the both above-mentioned phases of adjusting the variator gear ratio, to switch from one above-mentioned phase to the other without breaking the transmitted torque, which lowers the drive performance.

### Summary of the Invention

The task to be solved with this invention is to create a wide-range continuously variable-ratio drive, i.e., a supervariator, comprising a basic variator provided with a mechanism engaging a differential and a matching gear group, enabling to change power flows in it without their breaking and providing a wide range of variation and a high efficiency, both being higher than those of the basic variator at least in a part of the said variation range which is the most important for operation of a machine driven from the said supervariator.

In order to achieve the stated technical effect while solving the set task a continuously variable-ratio drive, which comprises a planetary variator having the input unit and the output unit, both being cinematically linked with a control mechanism, which engages a differential, a matching gear group is installed in the cinematic circuit of the control mechanism between the output unit of the variator and the differential, wherein the said matching gear group engages the output unit of the variator and one of the central gears of the differential and increases speed in this direction, the gear ratio of the matching gear group being not less than the minimum value of the variator gear ratio, and the output unit of the drive being made with the possibility of alternatively engaging it with the units of the control mechanism engaging the differential and the matching gear group, when the speeds of those units are equal.

Other embodiments of the invention are also possible, according to which it is necessary that:
- alternative engagement of the drive output unit with the corresponding units of the control mechanism would consist of two phases, the first of which includes engagement of the drive output unit simultaneously with two units of the control mechanism, which at the given moment have speeds close to each other, and the second one includes disengagement of one of those units while keeping the second unit engaged, the two phases are performed with a torque transmitted through the drive, i.e., without breaking the power flow;
- the gear ratio of the matching gear group would be made so as its value would be not less than the minimum gear ratio of the variator at the greatest allowable load in respect of torque and power for obtaining a position of the variator cinematic units, which corresponds to the minimum cinematic gear ratio;
- the control mechanism would be made with the possibility of reversing the drive output unit;
- it would be provided with an additional gear group at the output;
- alternative engagement of the drive output unit with the corresponding units of the control mechanism, including two phases, would be performed through gear couplings the teeth of which are engaged at the first phase simultaneously with the teeth of half-couplings pertaining to cinematically different units of the control mechanism;
- the matching gear group would be made as a planetary gear group, at least with single-crown pinions and one of the central gears immovable;
- it would be provided with speed sensors installed at the engaged and disengaged mechanism units and a block of comparing them as well as with a servo actuator for engaging and disengaging couplings, which is triggered by a signal received from the comparison block when the speeds of the units become equal.

### Brief Description of the Drawings

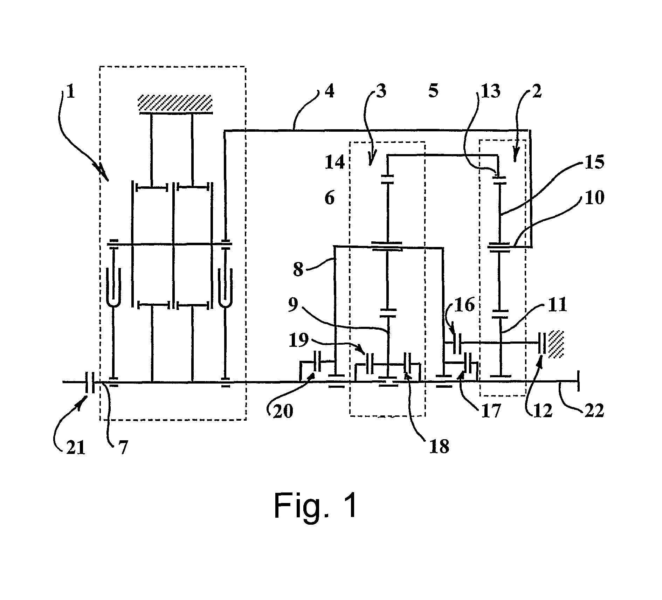

The invention is shown in Fig. 1 depicting the schematic diagram of the drive. Taking into account the symmetry of the view at Fig. 1, only the upper half of the device is shown.

In Fig. 1 the basic elements of the device, i.e., the basic planetary variator 1, the increase matching gear group 2 and the differential 3, are outlined with hatches for better understanding of the schematic diagram. The matching gear group 2 is made planetary, which corresponds to the actual making of the structure. The basic planetary variator 1 may be made, in particular, according to RF Patent No. 2140028, F 16 H 15/50, 1998, Inventor Gulia N.V.

The increase matching gear group 2 increases the speed of the carrier 4 of the variator 1 and transmits rotation through the common ring gear - epicycle 5 - to the pinions 6 of the differential 3. The carrier 4 of the variator 1 is engaged with the carrier 10 of the increase matching gear group 2, the inner central gear 11 is made with the possibility of being stopped by the brake 12, and an increased speed is transmitted from the outer central gear 13 to the outer central gear 14 of the differential 3, e.g., with the use of the common ring gear 5 engaged with the pinions 15 in the gear group 2 and with the pinions 6 in the differential 3. It should be noted that rotation from the gear 13 may be also transmitted to the inner central gear 9 of the differential 3, and in such a case the gears 14 and 9 exchange their functions, which results in somewhat other gear ratio of the whole drive; the gear 14 in such a case should perform the cinematic functions of the gear 9. The drive is controlled by the control mechanism, namely by the brake 12 and couplings 16, 17, 18, 19, 20, 21. For increasing the gear ratio range an additional fixed-ratio gear group (is not shown in the drawings) may be installed at the supervariator output, which should have a gear ratio equal to the variation range of the supervariator. As to its function, this gear group is completely analogous to the demultiplier at the car transmission (see, e.g., Osepchugov V.V., Frumkin A.K. "The Car", M., Mashinostroenie Publishers, 1989, p. 65-66, Fig. 42). The output shaft of the supervariator may be installed both after the additional gear group and directly after the differential 3. The couplings 17, 18, 19, 20 may be made as gear couplings, which power elements (teeth) engage the corresponding units of the mechanism with a delay in disengaging the previous ones, i.e., the process of engaging the couplings is divided into two phases, at the first of which two different units of the mechanism of each coupling are simultaneously engaged; thus the power continuity is ensured.

### Preferred Embodiment of the Invention

The drive has three main modes of operation, see Fig. 1:
- the basic variator common mode of operation;
- the mode with power circulation (in which an increase in the basic variator gear ratio causes its reduction in the supervariator on the whole);
- the basic variator mode of operation with narrowing the range and increasing the efficiency with the subsequent transition to the same mode with power circulation, as described in the second case.

The first mode does not differ in anything from the basic variator mode of operation, with the only difference that after the variator output unit the increase gear group 2 is installed, which increases the speed of the output shaft 22 to the value close to the speed of the input shaft 7.

The second mode ensures a wide range of varying the gear ratio - actually about 25, at this the basic variator accounts for the range of about 10 and the mode with power circulation accounts for 2.5 (in total - 2.5 X 10 = 25). The control in this case is easier than in the second variant, but the efficiency at high gear ratios of the basic variator is small - about 0.8 - 0.85 at the maximum gear ratio i = 13 - 14, increasing to 0.9 at i = 5 and to 0.95 at the minimum i = 1.35 - 1.43. The efficiency at power circulation varies opposite to the above-described and depends heavily on the variation range; if the latter is 2.5, the efficiency varies from 0.95 at i of the basic variator 1.35 - 1.43 to 0.98 at i of the basic variator 13 - 14, in the said range up to 1.5 the efficiency does not descend lower than 0.95 in the whole range of variation.

It should be noted that just the mode of power circulation plays the dominating role, e.g., for the car performance - it corresponds to car movement on a highway at high speed and power.

If in car operation low speeds and high gear ratios play a significant role (e.g., for a tractor, process machinery etc.), the second mode is preferred, where the variator efficiency with the narrowing of the range is in any case higher than 0.95. But the common range of variation at this mode is about 5 - 7 and for its increase additional gear group may be used.

The role of the increase matching gear group 2 should be also mentioned. Its gear ratio should not be less than the minimum gear ratio of the basic variator 1, e.g., 1.35 - 1.43 (the first value relates to low loads and slips, the second one - to high loads and slips). Then the output shaft 22 engages with the elements of the differential 3 when their speeds are leveled, and the engagement may be performed without breaking the power flow; this case will be described below.

### Modes of operation of the Supervariator

1. The mode of operation of the basic variator without any changes.
2. The mode of operation of the supervariator with power circulation.
3. The mode of operation of the supervariator with narrowing the range of the basic variator.

### The mode of operation of the basic variator without any changes

In this mode the output shaft 22 is simultaneously engaged by the couplings 17 and 18 with the carrier 8 and the central gear 9 of the differential 3 which is thus blocked, and rotation from the carrier 4 of the variator 1 is transmitted to the shaft 22 with the increase, assumingly, of 1.4 times the speed of the increase gear group 2. As an example, let's assume that the speed of the input shaft 7 is 1,000 rpm, the speed of the carrier 4 of the variator 1 is 1.4 times less, i.e., 714 rpm, and the speed of the output shaft 22 is again 1,000 rpm.

### The mode of operation of the supervariator with power circulation

In this mode of operation with power circulation the shaft 7 is engaged by the coupling 20 with the carrier 8 of the differential 3. The central gear 9 of the differential is engaged by the coupling 18 with the shaft 22. Then the ring gear 5, being the outer central gear 14 of the differential 3, has the speed of 1,000 rpm, the speed of the carrier 8 and the shaft 7 is also 1,000 rpm, and, consequently, the speed of the shaft 22 is also 1,000 rpm. But the coupling 18 has been already engaged in the previous case together with the coupling 17, and, consequently, the engagement of the coupling 20 changes nothing, there will be no breakage of power, and the coupling 17 may be then disengaged. After that the basic variator 1, due to the control necessity, is transferred to a position with an increased gear ratio, and at iₘₐₓ = 13 - 14 the shaft 22 will rotate at the maximum speed - 1,000 X 2.5 = 2,500 rpm (this may be confirmed by making a speed plot as well as by making calculations according to a known method given in the above-cited book by Pronin B.A. and Revkov G.A. "Variators", M., Mashinostroenie Publishers, 1980, p. 299-302, calculation example is given on p. 304-305).

Taking into account that the minimum speed of the ring gear 5 in the first mode is 1,000 : (13 - 14) X 1.4 ≈ 100 rpm, the variation range of the supervariator is 2,500 : 100 = 25.

### The mode of operation of the supervariator with narrowing the range of the basic variator

For entering this mode of operation at the engaged increase gear group 2 the carrier 8 of the differential 3 is engaged by the coupling 17 with the shaft 22, and the central gear 9 of the differential 3 is engaged by the coupling 19 with the shaft 7. At that the ring gear 5 and the gears 9 and 14 will have the speed of 1,000 rpm, consequently the shaft 22 rotates at the same speed. The necessary engagement of the coupling 18 will be shock-free and will not break the power flow, and, thus, it will be possible to enter the second mode, i.e., the mode with power circulation.

But the minimum speed of the shaft 22 will be significantly higher than in the mode of operation of the basic variator without any changes, since the variation range will be narrowed app. 4 times and will be app. 2.5, but the efficiency will grow significantly, as stated above. Due to the fact that the layout according to Fig. 1 is close to that actual for a car, it also illustrates the mode of reverse and smooth start.

The engine (not shown in the drawings) is engaged by the coupling 21 with the input shaft 7 of the variator 1, and the brake 12 is used for smooth starting of a machine by stopping the inner central gear 11 of the increase matching gear group 2. Reverse operation may be entered at the couplings 16 and 18 engaged by smoothly engaging the brake 12. At the carrier 8 immovable the gear 9 starts rotating the shaft 22 through the coupling 18 in the direction opposite to that of the gear 14 and, consequently, to that of the input shaft 7.

And, finally, the fixed-ratio gear group - demultiplier (not shown in the drawings) may be engaged at the supervariator output to the shaft 22 if it is necessary to increase the variation range of the supervariator. Usually, as the first step, the decrease gear group (e.g., equal to the variation range) of the demultiplier is engaged, the minimum gear ratio of the supervariator is achieved, and then, at the engaged brake 12, the maximum gear ratio of the variator is again achieved, and the minimum gear (usually the direct drive) is engaged. After that the drive works in accordance with the process described above. Having several gear groups in the demultiplier, it is possible to expand the variation range of the whole drive practically with no limits. For example, in the variation range equal to 6 two gear groups (apart from the direct drive) in the demultiplier will give the range equal to 6³ = 216 which is excessively high. In principle, it is possible to change gears in fixed-ratio transmissions and in demultipliers without breaking the power flow, and this is done in transmissions of off-road vehicles. Such technical solutions are well known and may be used, if necessary, in the inventive device.

It should be noted that the couplings 17, 18, 19, 20, which should be engaged when the speeds of the engaged and disengaged units of the control mechanism are equal, may be controlled by a servo actuator (e.g., a solenoid) which receives a signal from the block comparing the values of signals received from the speed sensors installed at the engaged and disengaged units of the control mechanism when their speeds become equal (up to the full coincidence) (the speed sensors, the comparison block and the servo actuator are not shown in the drawings).

### Industrial Applicability

This invention may be used in transport mechanical engineering, in particular as a continuously variable-ratio transmission for cars and other transportation means.

## Claims

1. A continuously variable-ratio drive comprising a planetary variator having an input unit and an output unit, both units being cinematically linked with a control mechanism, and a differential, **characterized in that** it includes a matching gear group installed in the cinematic circuit of the control mechanism between the output unit of the variator and the differential, which matching gear group engages the output unit of the variator and one of the central gears of the differential and increases speed in this direction, the gear ratio of the matching gear group being not less than the minimum value of the variator gear ratio, and the output unit of the drive being made with the possibility of alternatively engaging it with the units of the control mechanism engaging the differential and the matching gear group when the speeds of those units are equal.

2. The drive according to Claim 1, **characterized in that** alternative engagement of the drive output unit with the units of the control mechanism consists of two phases, the first of which includes engagement of the drive output unit simultaneously with two units of the control mechanism, which at the given moment have speeds close to each other, and the second one includes disengagement of one of those units while keeping the second unit engaged, the two phases being performed with a torque transmitted through the drive, i.e., without breaking the power flow.

3. The drive according to Claim 1, **characterized in that** the gear ratio of the matching gear group is made so as its value is not less than the actual minimum gear ratio of the variator at the greatest allowable load in respect of torque and power for obtaining such a position of the variator cinematic units, which corresponds to the minimum cinematic gear ratio.

4. The drive according to Claim 1, **characterized in that** the control mechanism is made with the possibility of reversing the drive output unit.

5. The drive according to Claim 1, **characterized in that** it is provided with an additional gear group at the output.

6. The drive according to Claim 1, **characterized in that** alternative engagement of the drive output unit with the corresponding units of the control mechanism, including two phases, is performed through gear couplings the teeth of which are engaged at the first phase simultaneously with the teeth of half-couplings pertaining to cinematically different units of the control mechanism.

7. The drive according to Claim 1, **characterized in that** the matching gear group is made as a planetary gear group, at least with single-crown pinions and one of the central gears immovable.

8. The drive according to Claim 1, **characterized in that** it is provided with speed sensors installed at the engaged and disengaged mechanism units and a block of comparing them as well as with a servo actuator for engaging and disengaging couplings, which is triggered by a signal received from the comparison block when the speeds of the units become equal.
